# EUROPÄISCHE PATENTSCHRIFT

(11) **EP 2 299 499 B1**
(45) Veröffentlichungstag und Bekanntmachung des Hinweises auf die Patenterteilung: **08.01.2014**
(21) Anmeldenummer: 10009221.2
(22) Anmeldetag: 06.09.2010
(51) Int. Cl.: H01L 31/042

(54) **Schwimmende Photovoltaik-Anordnung**
Floating photovoltaic unit
Agencement photovoltaïque flottant

(30) Priorität: 17.09.2009 CH 14342009
(43) Veröffentlichungstag der Anmeldung: 23.03.2011
(73) Patentinhaber: TNC Consulting AG, 8703 Erlenbach CH (CH)
(72) Erfinder: Nordmann, Thomas, 8703 Erlenbach (CH)
(74) Vertreter: Alder, Hans Rudi

(56) Entgegenhaltungen:
- EP-A1- 2 058 222
- WO-A2-91/17573
- WO-A2-2009/036107
- GB-A- 2 383 978
- US-A1- 2007 234 945

## Beschreibung

Die vorliegende Erfindung betrifft eine schwimmende Photovoltaik-Anordnung gemäss Oberbegriff des Anspruchs 1.

Landgestützte Photovoltaik-Anlagen sind hinlänglich bekannt und werden vorzugsweise auf Dachflächen, an Schallschutzwänden oder auf Freiflächen aufgestellt. Die Nutzung von Freiflächen für Photovoltaik-Anlagen steht oft im Widerspruch mit den heutigen Anforderungen des Landschaftsschutzes und ist in zivilisierten Gegenden unbeliebt. Ausserdem besteht bei den Betreibern derartiger Anlagen der Wunsch die Effizienz solcher Photovoltaik-Anlagen zu optimieren und deshalb die Solar-Module drehbar zu montieren.

Wegen des unerwünscht grössen Platzbedarfs und der Möglichkeit ausrichtbere Anlagen schaffen zu können, ist schon vorgeschlagen worden, derartige Anlagen statt auf dem Festland in Küstennähe auf eine schwimmende Plattform zu montieren. Dank der schwimmenden Konstruktion dieser Plattformen können diese je nach Sonnenstand in einfacher Weise gedreht werden, damit sie optimal von der Sonne beschienen werden. Darüber hinaus können Kosten gespart werden, weil damit keine aufwändigen Drehkonstruktionen notwendig sind

So wird bspw. in der WO2008/015064 eine im Meer schwimmende Plattform beschrieben, welche eine Mehrzahl von Sonnenkollektoren trägt und einen Antrieb für die optimale Positionierung der Plattform aufweist. Eine auf dem Meer schwimmende und drehbare Konstruktion, welche eine Vielzahl von Photovoltaik-Modulen in Kombination mit Windgeneratoren trägt, ist auch aus der WO2009/000249 bekannt. Eine ähnliche Vorrichtung wurde auch schon in der US-4'786'795 beschrieben. Erste schwimmende photovoltaische Kraftwerk-Anlagen wurden in einem Schwimmbecken auf dem Festland gebaut und sind beispielsweise aus der WO 2009/090538 bekannt. Eine weitere Studie zu schwimmenden PV-Systemen (Photovoltaik-Systemen) ist beispielsweise von der 23. European Photovoltaic Solar Energy Conference, Valencia, 5. Sept. 08 bekannt.

Aus der EP-2'058'222 ist eine schwimmende Plattform für die Elektrizitätsgewinnung mittels Solarenergie bekannt. Die einzelnen Photovoltaik-Module sind auf einer Träger-Struktur befestigt, weiche über Trossen mit dem Gewässeruntergrund fest verankert ist. Eine solche PV-Anordnung eignet sich nicht für den Einsatz auf Gewässerbecken, deren Wasserpegel starken Schwankungen ausgesetzt ist. Die Photovoltaik-Module sind entweder direkt mit einem urbanen Stromnetz oder mit einer wiederaufladbaren Batterie-Anordnung verbunden. Diese Anordnung ist für die Verwendung in küsten- und verbrauchernahen Gewässern vorgesehen, d.h. lässt sich nur mit lokalen Netzwerken betreiben. Solche lokale Stromnetze sind für die Übertragung von Niederspannung (bis 1kV) ausgelegt und eignen sich nicht für die Übertragung von Hochspannung (50 bis 150kV) oder Höchstspannung (220 bis 380 kV), wie sie für die industrielle Stromproduktion erforderlich ist.

Es versteht sich leider, dass die Stromerzeugung fem von den Verbraucherzentren einen aufwändigen Energietransport erforderlich macht. Die Stromübertragung über grosse Strecken vom Standort in den Bergen oder Im Meer zu den Verbrauchern weit im Binnenland sowie der Aufbau einer eigenen Kraftwerk-Infrastruktur mit eigenen Stromnetzen machen solche Anlagen kostspielig und unterhalisintensiv.

Es ist deshalb die Aufgabe der vorliegenden Erfindung eine schwimmende Pholovoltaik-Anordriung - im Folgenden auch PV-Anordnung genannt - zu schaffen, welche die Nachteile der bekannten Anlagen überwindet und insbesondere keine zusätzliche Infrastruktur mit hohen Unterhaltskosten erforderlich macht, um die Verbraucherzentren im Binnenland mit Strom zu versorgen.

Es ist eine besondere Aufgabe der vorliegenden Erfindung eine schwimmende Photovoltaik-Anordnung zu schaffen, weiche den Anforderungen des Landschaftsschutzes, d.h. ohne zusätzliche Nutzung der Landreserven, ebenso genügt, wie der Stromerzeugung vor Ort.

Diese Aufgaben werden erfindungsgemäss mit einer schwimmenden Photovoltaik-Anlage mit den Merkmalen des Anspruchs 1 gelöst und insbesondere mit einer schwimmende Photovoltaik-Anordnung, welche mit einem bestehenden ein Staubecken oder Küstengewässer umfassendes Wasserkraftwerk und dessen Infrastruktur verbunden ist, um den photovoltaisch erzeugten Strom in ein Stromnetz des Wasserkraftwerks einzuspeisen, wobei die Photovoltaik-Anordnung auf dem Staubecken oder dem Küstengewässer angeordnet ist.

In einer besonderen Ausführungsform ist die erfindungsgemässe Photovoltalk-Anordnung mit einer sich dem Wasserpegel des Staubeckens oder des Küstengewässers selbsttätig anpassenden Verankerung versehen, um die benötigte Wasseroberfläche, auf welcher die Photovoltaik-Anordnung frei treiben kann möglichst minimal zu halten. Ohne diese selbstregulierende Verankerung würde sich die erforderliche Wasseroberfläche bei niedrigem Wasserpegel stark vergrössern. Solche Verankerungen sind bspw. aus der US-5'603'280 oder der US-6'082'158 bekannt und weisen einen Pfahl auf, an welchem ein Schwimmkörper mit Festmacher, der dem Stand des schwankenden Wasserpegels folgt, beweglich befestigt ist.

In einer bevorzugten Ausführungsform weist die erfindungsgemässe Photovoltaik-Anordnung eine Verankerung auf, bei welcher ein mit einem Gegengewicht versehenes Ankertau über eine an einer Boje der PV-Anordnung befestigte Umlenkrolle führt. Weitere Ausführungsformen solcher Verankerungen sind auch in der DE-27'49'106 beschrieben.

So ist aus der WO-2009/036107 eine Off-Shore-Vertikalwindturbine bekannt, welche auf einer schwimmenden Plattform befestigt ist. Diese Plattform ist mit einem Ankersystern ausgerüstet, welches sich selbsttätig an den Pegelstand des Gewässers anpasst. Solche Systeme müssen sorgfältig gewartet werden und erlauben es nicht, die schwimmende Plattform bei starken Winden stationär über Grund zu halten.

In einer weiteren Ausführungsform umfasst die erfindungsgemässe Photovoltaik-Anordnung eine Vielzahl einzelner Photovoltaik-Bojen, wobei die einzelnen Photovoltaik-Bojen mindestens einen Schwimmkörper und mindestens ein Photovoltaik-Modul aufweisen. Die einzelnen Photovoltaik-Module sind vorzugsweise in Serie geschaltet und beweglich miteinander verbunden.

In einer bevorzugten Weiterbildung dieser Ausführungsform sind die Schwimmkörper in Form von paarweise angeordneten Schwimmkufen oder in Form von paarweise angeordneten Wassernudeln und/oder Seeschlangen ausgebildet. Dabei sind die paarweise angeordneten Wassernudeln und/oder Seeschlangen mit Hilfe mehrerer Halterungen voneinander beabstandet.

Um die bekannten Beeinträchtigungen und Schäden (bspw. Muschel- oder Algenbewuchs) bei im Warmwasser schwimmenden Photovoltaik-Anordnungen zu verhindern, sind diese mit Mitteln gegen Warmwasserschäden versehen. Diese Mittel können Farbanstriche oder andere wirksame Massnahmen umfassen.

Um Beeinträchtigungen und Schäden (bspw. Vereisung) bei im Kaltwasserund bei Tieftemperatur schwimmenden Photovoltaik-Anordnungen zu verhindern, sind diese Anordnungen mit Mitteln gegen Kaltwasser- und Tieftemperaturschäden versehen. Solche Mittel sind bekannt und können Abwärme führende Systeme umfassen.

Zur Optimierung der Effizienz der erfindungsgemässen PhotovoltaikAnordnung weist diese in einer weiteren Ausführungsform eine einachsige Sonnenstand-Nachführung auf.

Am Beispiel Schweiz lässt sich die Bedeutung der vorliegenden Erfindung quantitativ erläutern. So lässt sich die Gesamtfläche der Schweiz aufteilen in Wald-, Landwirtschafts-, Wasser- und Zivilisationsfläche. Dabei zeigt sich, dass pro Kopf gemittelt 4'712 m² Zivilisationsfläche zur Verfügung stehen. Davon werden pro Kopf gemittelt 1'205 m² bereits benutzt. Bei näherer Betrachtung sieht man, dass neben dem Siedlungsraum von der für die Zivilisation genutzten Fläche pro Kopf gemittelt 107 m² für Strassen und ihre Infrastruktur benutzt werden, 52 m² für Wohnungsbau, 11 m² für das Eisenbahnnetz, 10 m² für die Industrie, 17 m² für Wasserkraft, wobei der Grossteil dieser Fläche von Stau- und Speicherseen eingenommen wird. Im Vergleich dazu können mit einer pro Kopf gemittelten 6.3 m² grossen Photovoltalk-Anlage etwa 10% des pro Kopf Jahresbedarfs an Elektrizität gedeckt werden.

Beispielsweise weist der in der Schweiz gelegene Sihlsee (ein Stausee für die Versorgung des SBB-Stromnetzes) eine 11 km² grosse Wasseroberfläche auf und fasst ein für die Stromerzeugung mittels Wasserkraft einsetzbares Wasservolumen von 91.6 Mio m³. Diese Wassermenge entspricht einer Pegelstandänderung von ca. 9 m. Wegen der natürlich zulaufenden Gewässer kann mit diesem Wasserbecken ohne anderes Dazutun, insbesondere Rückpumpen von Wasser ausserhalb der Verbrauchspitzen, und mit der vorhandenen Wasserkraftanlage ca. 270 Mio kWh/Jahr Strom produziert werden. Um diese Ausspeisung zu verdoppeln würden Standard-PV-Module mit einer Gesamtfläche von etwa 2 km² benötigt. Berücksichtigt man, dass PV-Anordnungen nie vollflächig ausgelegt werden können, d.h. Zwischenräume zwischen den einzelnen PV-Modulen bestehen, entspricht dies einer Gesamtfläche von ca. 4 km² für die schwimmende PV-Anordnung und einer zusätzlichen Ausspeisung von ca. 266 Mio kWh/Jahr.

Im Folgenden soll die Erfindung anhand eines Ausführungsbeispieles und mit Hilfe der Figuren näher erläutert werden. Dabei zeigen:
- Fig. 1:: schematische Darstellung einer schwimmenden PV-Anordnung bekannter Art;
- Fig. 2:: schematischer Querschnitt durch einen Stausee mit Wasserkraftwerk und erflndungsgemässer PV-Anordnung;
- Fig. 3a:: schematische Darstellung einer PV-Anordnung mit einer selbstregu- lierenden Verankerung bei hohem Wasserstand;
- Fig. 3b:: schematische Darstellung einer PV-Anordnung mit einer selbstregu- lierenden Verankerung bei niedrigem Wasserstand;
- Fig. 4:: schematische Darstellung einer besonderen Konfiguration der erfin- dungsgemässen PV-Anordnung;
- Fig. 5:: schematische Darstellung einer besonderen Ausgestaltung von Schwimmbojen für die erfindungsgemässe PV-Anordnung;
- Fig. 6:: schematische Darstellung einer bevorzugten Ausgestaltung von Schwimmbojen für die erfindungsgemässe PV-Anordnung;
- Fig. 7:: schematische Darstellung von Schwimmbojen gemäss Fig. 6 im Detail;
- Fig. 8:: schematische Darstellung einer Halterung für Schwimmbojen ge- mäss Fig. 6:
- Fig. 9:: schematische Darstellung einer bevorzugten Ausgestaltung eines PV-Feldes für eine erfindungsgemässe PV-Anordnung.

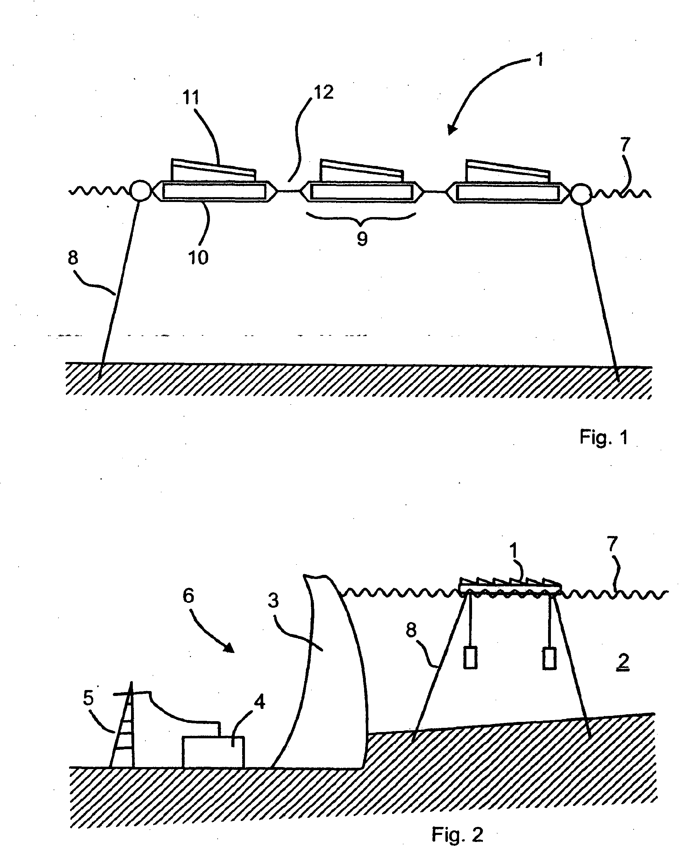

Fig. 1 zeigt einen schematischen Querschnitt durch eine schwimmende Photovoltaik-Anordnung (1), im Folgenden auch PV-Anordnung (1) genannt, bekannter Art. Es versteht sich, dass der Begriff Anordnung hier im Sinn einer Anlage oder Vorrichtung zu verstehen ist, welche der industriellen Stromerzeugung dient. Berücksicht man, dass der typische Verbrauch eines Einfamilienhauses zwischen 4'000 - 8'000 kwh/a liegt, dann soll im Folgenden bei einer jährlichen Sttomproduktion von 300'000 kWh/a von industrieller Stromerzeugung gesprochen werden. Tatsächlich können bereits Kleinstwasserkraftwerke mit einer Generatorenleistung von weniger als 300 kW eine solche jährliche Stromproduktion gewährleisten. Die in Fig. 1 dargestellte PV-Anordnung (1) entspricht einer Versuchsanordnung und treibt auf einem flachen Wasserbecken mit konstantem Pegel (7). Diese Anordnung weist mehrere PV-Bojen (9) auf, welche einen Schwimmkörper (10) und ein PV-Modul (11) umfassen. Die Schwimmkörper (10) der einzelnen PV-Bojen (9) bestehen bei dieser bekannten Anordnung aus einem leichten Schaumstoff, welcher in einer Folie eingeschweisst ist. Die gesamte PV-Anordnung (1) ist begehbar, um Unterhaltsarbeiten vornehmen zu können. Eine Verankerung (8) mit fest abgelängten Ankertauen und massiven Ankerblöcken hält diese PV-Anordnung (1) stationär über Grund. Diese PV-Anordnung (1) ist nur lokal verwendbar, d.h. erfordert ein künstlich angelegtes Wasserbecken und eine eigene Infrastruktur mit einem Stromnetz für die Stromverteilung. Eine solche Anordnung erweist sich als zu teuer für die industrielle Verwendung.

Die in Fig. 2 schematisch dargestellte PV-Anordnung (1) ist erfindungsgemäss mit einem Wasserkraftwerk (6) und dessen Infrastruktur (3, 4, 5) verbunden. Im vorliegende Beispiel schwimmt die erflndungsgemässe PV-Anordnung (1) auf dem von einem Wehr oder einer Staumauer (3) gestauten Stau- oder Gewässerbecken (2). Der photovoltaisch erzeugte Strom wird über einen Steg oder ein Unterwasserkabel in ein Stromnetz (5) des Wasserkraftwerks (6) eingespeist. Es soll hier im Folgenden unter dem Begriff "Wasserbecken" ein stehendes Gewässer gemeint sein, während unter dem Begriff "Gewässerbecken" ein fliessendes oder strömendes Gewässer, welches für Wasserkraftwerke jedwelcher Art verwendet wird oder verwendbar ist. Derartige Wasserkraftwerke erzeugen typischerweise Strom im Bereich von einigen 100 MWh/a bis zu mehreren TWh/a. Ein Stausee ist hier als fliessendes Gewässer, d.h. Gewässerbecken zu definieren. Unter dem Begriff Gewässerbecken (2) soll hier jedoch nicht nur ein Stausee verstanden werden, sondern auch der Rückstauraum bei Flusskraftwerken, ein offener Meerbusen, eine Meeresbucht oder ein Fjord, welche für die industrielle Stromproduktion mit Hilfe von Stau-, Wellen-, Gezeitenkraftwerke u.a. verwendet werden. Die hier schematisch dargestellte Infrastruktur eines Wasserkraftwerks (6) umfasst ein Maschinenhaus (4) mit Turbine, Generator und Transformator für die Speisung eines Stromnetzes (5). Das dazugehörige Gewässerbecken (2) - ein Stausee - wird von einer geeigneten Staumauer (3) abgeschlossen, um das Wasser kontrolliert einer Turbine zuführen zu können.

Die erfindungsgemäss positionierte PV-Anordnung (1) schwimmt In unmittelbarer Nähe dieser Staumauer (3) auf dem Gewässerbecken (2), dessen Wasserpegel (7) sich wegen der Stromerzeugung stark ändern kann. Eine besondere, d.h. sich dem Wasserpegel (7) des Staubeckens (2) selbsttätig anpassende Verankerung (8) erlaubt es, diese PV-Anordnung (1) trotzdem stationär über Grund zu halten. Unter Verankerung soll im Folgenden jedwelche geeignete Vorrichtung verstanden werden, welche geeignet ist die schwimmende PV-Anordnung (1) auf einem Gewässerbecken mit schwankendem Wasserpegel stationär über Grund zu positionieren. Dieser Wasserpegel (7) schwankt bei Staukraftwerken, Gezeitenkraftwerken oder Wellenkraftwerken regelmässig. Insbesondere eignet sich bei starken Wasserpegelschwankungen eine Verankerung (8) mit einem Pfahl, eine solche mit Gegengewichten und Umlenkrollen, eine solche mit elastischen Elementen oder eine solche mit elektronischen Sensoren und elektronisch gesteuerten Antriebsmotoren. Es versteht sich, dass diese Verankerungen (8) auch eine Rotation der gesamten PV-Anordnung (1) für eine Sonnenstand-Nachführung (17) erlauben können.

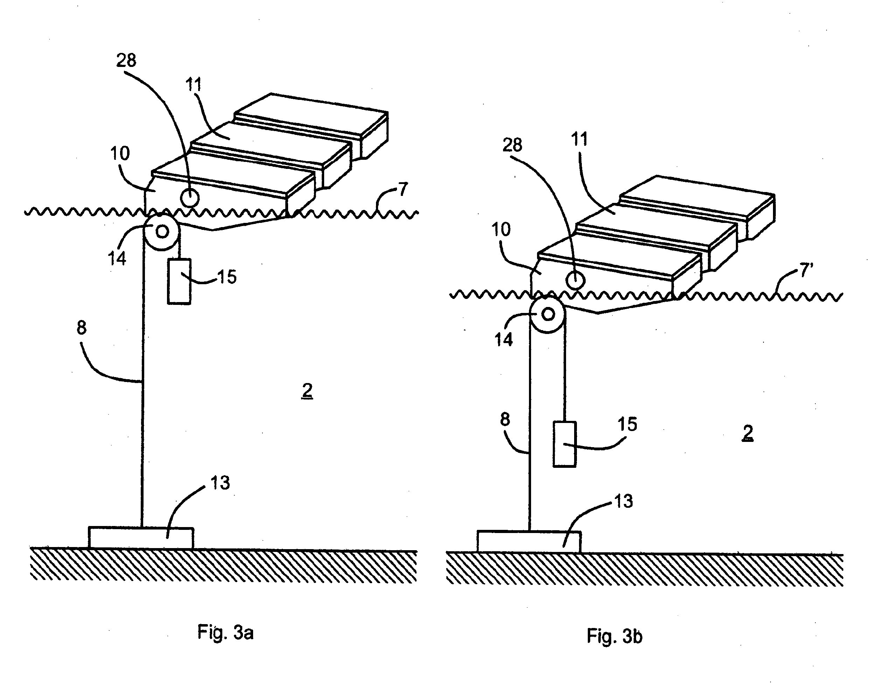

Figuren 3a und 3b zeigen eine mögliche Ausführungsform für eine sich an den Pegelstand (7, 7') selbsttätig anpassende Verankerung. Die auf dem Staubekken schwimmenden PV-Bojen (9) mit Schwimmkörper (10) und PV-Modul (11) sind hier mit einer Verankerung (8) versehen, welche einen Anker (13), ein Gegengewicht (15) und eine Umlenkrolle (14) umfassen. Fällt der Wasserpegel (7) auf einen niedriger liegenden Wasserpegel (7') folgen die PV-Bojen (9) dieser Wasserstandsänderung mit im Wesentlichen unveränderter Verankerungsspannung und werden so stationär über Grund gehalten.

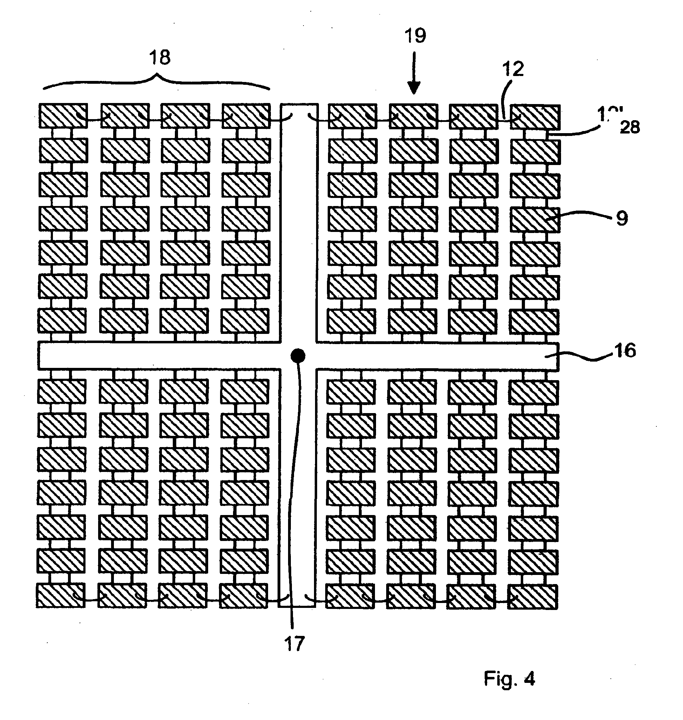

Es versteht sich, dass die Schwimmkörper (10) beliebig geformt sein können, d.h. insbesondere einen runden, rechteckigen oder polygonförmigen Querschnitt und/oder ein gewölbtes oder flächiges Bodentell aufweisen. In einer bevorzugten Ausführungsform der vorliegenden Erfindung sind die einzelnen PV-Bojen (9) über Kupplungen (28) beweglich miteinander gekoppelt und bilden ein PV-Feld (18), wie es bspw. in Fig. 4 schematisch dargestellt ist. Bei dieser Ausführungsform sind dle einzelnen PV-Bojen (9) in Reihen (19) angeordnet, welche wiederum über Querverbindungen (12) in Serie miteinander verbunden sind, um ein schwimmendes PV-Feld (18) zu bilden. Vier derartige Felder (18) sind an einem kreuzförmigen Steg (16) befestigt und bedecken eine rechteckförmige Wasseroberfläche. Dieser Steg (16) kann die erforderliche Verkabelung tragen und ist begehbar, um den Unterhalt der gesamten Anordnung zu vereinfachen. In einer anderen Ausführungsform sind die PV-Bojen (9) seerosenartig angeordnet und bedecken eine kreisförmige Wasseroberfläche. In beiden Fällen lässt sich eine zentrale Sonnenstand-Nachführung (17) vorsehen.

Je nach örtlicher Situation und Vorschriften sind die erfindungsgemässen PV-Felder (18) mit einem Schwimmsteg oder einer Unterwasserleitung versehen. welche es erlauben den von den PV-Modulen (11) erzeugten Strom dem Wasserkraftwerk (6) zuzuführen. Derartige Stege bieten sich für die Verwendung bei den Unterhaltsarbeiten an und sind in geeigneter Weise dimensioniert und ausgerüstet.

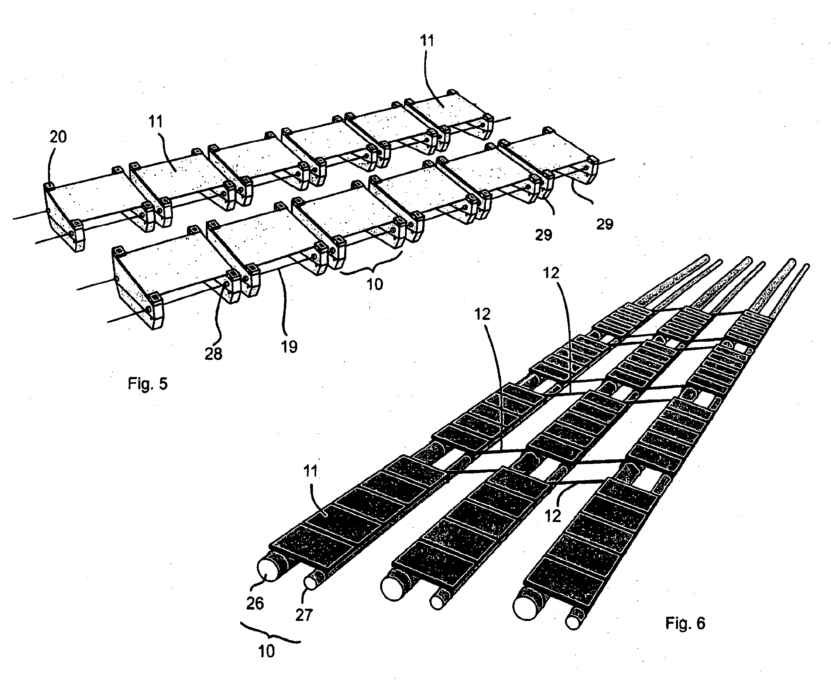

Fig. 5 zeigt eine erste Ausführungsform für den Aufbau der miteinander gekoppelten PV-Bojen (9). Dabei weist jede dieser Bojen (9) einen Schwimmkörper (10) aus, welcher paarweise nebeneinander angeordneten Schwimmkufen (29) umfasst. Geeignete Formen für diese Schwimmkufen (29) lassen sich bspw. bei Wasserflugzeugen finden und eigen sind besonders für die Verwendung in stark strömenden Gewässern. Die jeweiligen Schwimmkufen (29) sind mit Kupplungen (28) in Form von Durchführungen, in welchen ein bewegliches Verbindungselement (19) eingespannt ist, versehen. Dies erlaubt einen flexiblen Aufbau von ganzen Reihen (19) eines PV-Feldes (18). Dle einzelnen PV-Module (11) werden mit Befestigungselementen (20) an den einzelnen Schwimmkufen (29) befestigt und bilden zusammen mit diesen eine stabile PV-Boje (9). Es versteht sich, dass die Schwimmkörper (10), resp. deren Schwimmkufen (29) derart ausgebildet sind, dass die einzelnen PV-Module (11) zur Horizontalen geneigt liegen, um einen optimalen Wirkungsgrad zu erzielen.

Eine bevorzugte Ausführungsform für den flexiblen Aufbau ganzer Reihen (19) eines PV-Feldes (18) umfasst - wie in Fig. 6 dargestellt - Schwimmkörper (10) in Form von paarweise angeordneten Wassernudeln (27) und/oder Seeschlangen (26). Diese Wassemudeln (27) können aus geschiossenporigem Schaumstoff bestehen und sind genügend elastisch um dem Wellengang des Gewässerbeckens (2) im Wesentlichen folgen zu können. Der Fachmann kennt geeignete Materialien, welche die erforderliche UV-Stabilität aufweisen, wenig steif sind und der Dauerbelastung durch die Windkraft standhalten. Bekannte Seeschlangen (26) finden ihre Verwendung bei Wellenkraftwerken und weisen relativ starre Rohrsegmente auf, welche über Gelenkverbindungen miteinander gekoppelt sind. Diese Rohrsegmente bilden bei dieser Ausführungsform die Schwimmkörper (10), auf denen die PV-Module (11) gruppiert werden, was eine dichtere Anordnung derselben erlaubt. Dabei ist es unerheblich, ob die PV-Module (11) auf bereits installierten Seeschlangen (26) montiert werden oder ob geeignet dimensionierte und paarweise angeordnete Seeschlangen (26) verwendet werden. Geeignete Querverbindungen (12) erlauben es, die aus den Rohrsegmenten und den darauf gruppierten PV-Modulen (11) gebildeten PV-Bojen (9) in einem Feld (18) anzuordnen.

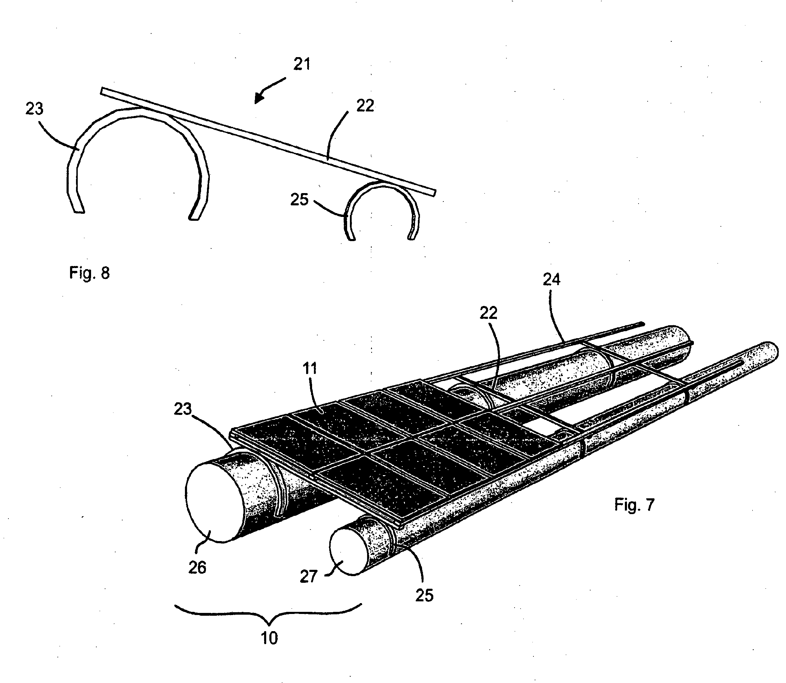

Fig. 7 zeigt den Aufbau einer bevorzugten PV-Bojen-Anordnung. Dabei sind auf den aus Wassernudel (27) und/oder Seeschlange (26) gebildeten Schwimmkörpern (10) elastische Halterungen (21), wie sie in Fig. 8 ersichtlich sind, aufgesetzt. Diese elastischen Halterungen (21) umfassen eine erste Klammer (23) und eine zweite Klammer (25), welche an einem Querträger (22) befestigt sind. Diese Klammem (23, 25) sind in einer bevorzugten Ausgestaltung auf den Schwimmkörper (10) aufgesteckt. Längsträger (24), weiche mit den Querträgem (12) fest verbunden sind erlauben die gruppenweise Befestigung der PV-Module (11). Es versteht sich, dass die Neigung der PV-Module (11) an die jeweiligen Umstände angepasst ist. Insbesondere sind dabei der Sonnenstand und die Windverhältnisse zu berücksichtigen.

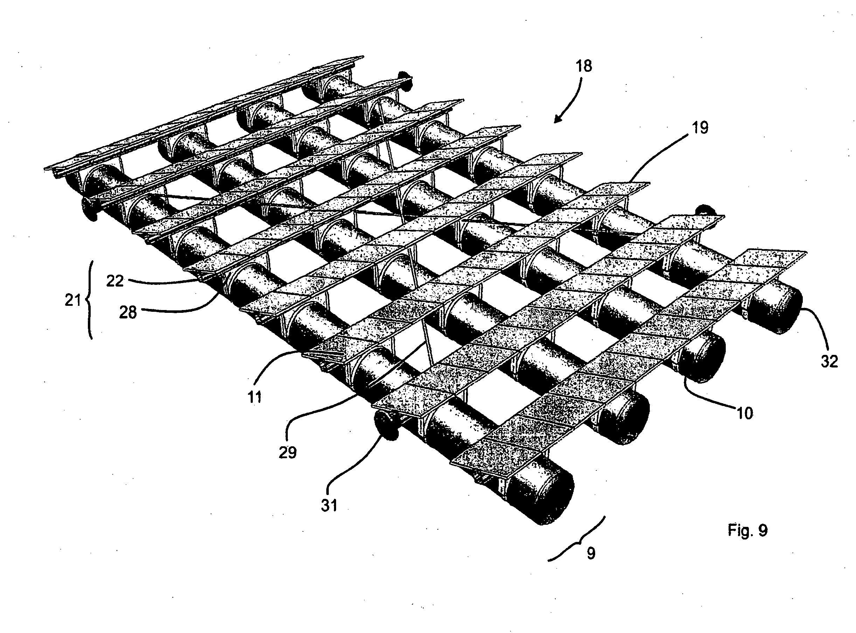

Fig. 9 zeigt eine bevorzugte Ausgestaltung für die erfindungsgemässe PV-Anordnung (1), bei welcher mehrere parallel angeordnete, hohlzylindrische Schwimmkörper (10) ein inselartiges PV-Feld (18) bilden. Diese hohlzylindrischen Schwimmkörper (10) weisen in einer ersten Ausführungsform einen Durchmesser von ca. 1.20 m und elne Länge von ca. 18.50 m. Die bedeckte Wasserfläche umfasst damit ca. 150 m². Die Schwimmkörper (10) tragen mehrere Reiter (28), auf welchen Querträger (22) befestigt sind- Diese Reiter (28) und Querträger (22) bilden eine Halterung (21), mit welcher mindestens zwei parallel liegende Schwimmkörper (10) sicher verbunden werden können. Auf diesen Halterungen (21), resp. diesen Querträgem (22) ist mindestens ein PV-Modul (11) befestigt. In der gezeigten Ausführungsform sind die einzelnen Schwimmkörper (10) mit mehrere PV-Modulen (11) bestückt und bilden eine PV-Boje (9) mit mehreren PV-Modulen (11). Mit Hilfe der Halterungen (21) lassen sich mehrere PV-Bojen (9) zu einem PV-Feld (18) zusammenfügen. Zur weiteren Stabilisierung des PV-Feldes (18), resp. der PV-Insel (18) ist eine Verstrebung (29) vorgesehen, welche an den Reitern (28) fixiert ist. Die Querträger (22) sind hier mit PV-Modulen (11) dicht belegt und bilden je eine PV-Reihe (19). In dieser bevorzugten Ausführungsform sind die einzelnen PV-Module (11) um 22.5° geneigt. In einer besonderen Ausführungsform der in Fig. 9 dargestellten PV-Insel (18) weisen einzelne der Querträger (22) seitliche Puffer (31) auf und werden die inneren PV-Bojen von den äusseren PV-Bojen (9) überragt, um stirnseitige Puffer (32) zu bilden. Damit lassen sich mehrere PV-Inseln (18) in einfacher Weise modulartig zusammenfügen um ausgedehnte PV-Anordnungen (1) zu schaffen.

Weiterbildungen der erfindungsgemässen PV-Anordnung (1) weisen Mittel auf, welche geeignet sind Warmwasserschäden, wie bspw. Muschel- oder Algenbewuchs, zu verhindern und/oder weisen Mittel gegen Kaltwasser- und Tieftemperatutschäden, bspw. Vereisungen, auf. Insbesondere lassen sich dafür Farbanstriche bekannter Art verwenden oder kann die Abwärme der PV-Module gezielt eingesetzt werden. Es versteht sich, dass die PV-Module an ihrer Oberseite mit Sprenkler-Anlagen gekühlt werden können oder deren Unterseite mit einer wärmeleitenden Folie belegt sein können.

Natürlich wird der Fachmann die erfindungsgemässe PV-Anordnung (1) auch mit anderen Stromerzeugem kombinieren, bspw. Windgeneratoren, SonnenKollektoren, Solar-Wasserdampfröhren, Seeschlangen, etc. um bestehende Kraftwerk-Anlagen zu ergänzen.

Die Vorteile der vorliegenden Erfindung sind dem Fachmann unmittelbar ersichtlich und insbesondere darin zu sehen, dass der durch die PV-Anordnung erzeugte Strom ohne zusätzliche Bodennutzung direkt in ein bestehendes Stromnetz eingespeist werden kann und keine zusätzliche Infrastruktur für die Stromaufbereitung und -verteilung erforderlich ist. Die erfindungsgemässe Anordnung ist in einfacher Weise aufbaubar und kann mit handelsüblichen Bauelementen kombiniert werden, d.h. erlaubt den Aufbau eines industriellen Hybrid-PV-Wasserkraftwerks in einfacher Weise zu realisieren.

## Patentansprüche

1. Schwimmende Photovoltaik-Anordnung (1), **dadurch gekennzeichnet, dass** diese zur Industriellen Stromerzeugung mit einem ein Gewässerbecken (2) umfassendes Wasserkraftwerk (6) und dessen Infrastruktur (3, 4, 5) verbunden ist, um den photovoltaisch erzeugten Strom in ein Stromnetz (5) des Wasserkraftwerks (6) einzuspeisen, wobei die Photovoltaik-Anordnung (1) auf dem Gewässerbecken (2) schwimmt *und diese Anordnung (1) mit einer sich dem Wasserpegel* (7) *des Gewässerbeckens* (2) *selbsttätig anpassende Verankerung (8) versehen ist, um diese Anordnung (1) stationär über Grund zu positionieren.*

2. Schwimmende Photovoltaik-Anordnung (1) nach Anspruch 1, **dadurch gekennzeichnet, dass** diese Verankerung (8) einen Pfahl und/oder ein über eine Umlenkrolle (14) geführtes Gegengewicht (15) und/oder ein elastisches Element und/oder elektronisch gesteuerte Antriebsmotoren umfasst.

3. Schwimmende Photovoltaik-Anordnung (1) nach einem der vorhergehenden Ansprüche, **dadurch gekennzeichnet, dass** diese eine Vielzahl einzelner Photovoltaik-Bojen (9) umfasst, wobei die einzelnen Photovoltaik-Bojen (9) mindestens einen Schwimmkörper (10) und mindestens ein Photovoltaik-Modul (11) aufweisen.

4. Schwimmende Photovoltaik-Anordnung (1) nach Anspruch 3, **dadurch gekennzeichnet, dass** die einzelnen Photovoltaik-Bojen (9) beweglich miteinander verbunden sind.

5. Schwimmende Photovoltaik-Anordnung (1) nach Anspruch 3, **dadurch gekennzeichnet, dass** die Schwimmkörper (10) in Form von paarweise angeordneten Schwimmkufen (9) ausgebildet sind.

6. Schwimmende Photovoltaik-Anordnung (1) nach Anspruch 3, **dadurch gekennzeichnet, dass** die Schwimmkörper (10) als Wassernudeln (27) und/oder Seeschlangen (26) ausgebildet sind.

7. Schwimmende Photovoltaik-Anordnung (1) nach Anspruch 6, **dadurch gekennzeichnet, dass** die Wassernudeln (27) und/oder Seeschlangen (26) parallel zueinander angeordnet sind und mit Hilfe mehrerer Halterungen (21) voneinander beabstandet sind.

8. Schwimmende Photovoltaik-Anordnung (1) nach einem der vorhergehenden Ansprüche, **dadurch gekennzeichnet, dass** diese mit Mitteln gegen Warmwasserschäden, wie bspw. Muschel- oder Algenbewuchs, versehen ist.

9. Schwimmende Photovoltaik-Anordnung (1) nach einem der vorhergehenden Ansprüche, **dadurch gekennzeichnet, dass** diese mit Mitteln gegen Kaltwasser- und Tieftemperaturschäden, wie Vereisung, versehen ist.

10. Schwimmende Photovoltaik-Anordnung (1) nach einem der vorgehenden Ansprüche, **dadurch gekennzeichnet, dass** diese eine einachsige Sonnenstand-Nachführung (17) aufweist.

## Claims

1. Floating photovoltaic arrangement (1), **characterized in that** for industrial power generation it is attendant on a hydroelectric plant (6) comprising a water basin (2) and on its infrastructure (3, 4, 5), in order to feed in the photovoltaically generated power into a power grid (5) of the hydroelectric plant (6), where the photovoltaic arrangement (1) floats on the water basin (2) and where this assembly (1) is provided with an anchorage (8), which is automatically adapting to the water level (7) of the water basin (2), in order to position this assembly (1) stationary over ground.

2. Floating photovoltaic arrangement (1) according to claim 1, **characterized in that** said anchorage (8) comprises a pole and/or a counterweight (15) guided via a deflecting pulley (14) and/or an elastic element and/or electronically controlled drive motors.

3. Floating photovoltaic arrangement (1) according to any one of the preceding claims, **characterized in that** it comprises a plurality of individual photovoltaic buoys (9), where the individual photovoltaic buoys (9) comprise at least one floating body (10) and at least one photovoltaic module (11).

4. Floating photovoltaic arrangement (1) according to claim 3, **characterized in that** the individual photovoltaic buoys (9) are movably interconnected.

5. Floating photovoltaic arrangement (1) according to claim 3, **characterized in that** the floating bodies (10) are formed in the shape of pairs of floating skids (9).

6. Floating photovoltaic arrangement (1) according to claim 3, **characterized in that** the floating bodies (10) are formed in the shape of flexibeams (27) and/or sea snakes (26).

7. Floating photovoltaic arrangement (1) according to claim 6, **characterized in that** the flexibeams (27) and/or sea snakes (26) are arranged in parallel to each other and are spaced apart with the aid of several supports (21).

8. Floating photovoltaic arrangement (1) according to any one of the preceding claims, **characterized in that** it is provided with means to prevent hot water damages, such as mussels or algae growth.

9. Floating photovoltaic arrangement (1) according to any one of the preceding claims, **characterized in that** it is provided with means to prevent cold water and low temperature damages, such as icing.

10. Floating photovoltaic arrangement (1) according to any one of the preceding claims, **characterized in that** it comprises a single-axis tracking of the sun's position (17).

## Revendications

1. Dispositif photovoltaïque flottant (1), **caractérisé en ce qu'** il est relié pour la production industrielle d'électricité avec une centrale hydro-électrique (6) comprenant un bassin d'eau (2) et avec l'infrastructure (3, 4, 5) de celle pour alimenter le courant produit de manière photovoltaïque dans le réseau électrique (5) de la centrale hydro-électrique (6), étant entendu que le dispositif photovoltaïque (1) flotte sur le bassin d'eau (2) et que ce dispositif (1) est équipé avec un ancrage (8), lequel s'adapte automatiquement au niveau d'eau (7), afin de positionner ce dispositif (1) stationnaire par rapport au sol.

2. Dispositif photovoltaïque flottant (1) selon la revendication 1, **caractérisé en ce que** l'ancrage (8) comprend un mât et/ou un contrepoids (15) guidé par un rouleau de renvoi (14) et/ou un élément élastique et/ou des moteurs d'entraînement à commande électronique.

3. Dispositif photovoltaïque flottant (1) selon l'une quelconque des revendications précédentes, **caractérisé en ce qu'**il comprend une pluralité de bouées photovoltaïques (9) individuelles, étant entendu quel chaque bouée photovoltaïques (9) comprend au moins un corps flottant (10) et au moins une module photovoltaïques (11).

4. Dispositif photovoltaïque flottant (1) selon la revendication 3, **caractérisé en ce que** les bouées photovoltaïques (9) individuelles sont reliés de façon mobile.

5. Dispositif photovoltaïque flottant (1) selon la revendication 3, **caractérisé en ce que** les corps flottants (10) sont réalisés en forme de paires de patins flottants (9).

6. Dispositif photovoltaïque flottant (1) selon la revendication 3, **caractérisé en ce que** les corps flottants (10) sont réalisés en forme de frites flottantes en mousse (27) et/ou de serpents de mer (26).

7. Dispositif photovoltaïque flottant (1) selon la revendication 6, **caractérisé en ce que** les frites flottantes en mousse (27) et/ou les serpents de mer (26) sont disposés parallèlement les uns à cotés aux autres et sont espacés à l'aide de plusieurs supports (21).

8. Dispositif photovoltaïque flottant (1) selon l'une quelconque des revendications précédentes, **caractérisé en ce qu'**il est muni de moyens contre les dégâts des eaux chaudes, tels que la croissance des coquillages ou des algues.

9. Dispositif photovoltaïque flottant (1) selon l'une quelconque des revendications précédentes, **caractérisé en ce qu'**il est muni de moyens contre les dégâts des eaux froides et de basse température, tels que le givrage.

10. Dispositif photovoltaïque flottant (1) selon l'une quelconque des revendications précédentes, **caractérisé en ce qu'**il comprend un système uniaxiale de suivre la position de soleil (17).
